# DEMANDE DE BREVET EUROPEEN

(11) **EP 1 849 581 A1**
(43) Date de publication de la demande: **31.10.2007**
(21) Numéro de dépôt: 06113015.9
(22) Date de dépôt: 24.04.2006
(51) Int. Cl.: B29C 65/02, H05B 6/40, H05B 6/10

(54) **Dispositif de soudage par induction magnétique**

(71) Demandeur: Aisapack Holding SA, 1896 Vouvry (CH)
(72) Inventeur: Caron, John, 1896 Vouvry (CH)
(74) Mandataire: Grosfillier, Philippe

(57) **Abrégé**

Dispositif de soudage par induction magnétique (1) comprenant des moyens inductifs (6,10) et une zone de soudage (2) pour la fixation d'une pièce plastique moulée (3) sur le pourtour de l'extrémité d'un corps tubulaire (4) constitué d'au moins une couche métallique et d'au moins une couche de résine thermoplastique; la pièce plastique moulée (3) comportant un goulot (5); le dispositif (1) comprenant en outre un logement (7) adapté pour contenir ledit goulot (5); les moyens inductifs (6,10) étant disposés à proximité de la zone de soudage (2) et du logement (7); caractérisé par le fait que le logement (7) comprend un élément à grande perméabilité magnétique (8).

## Description

### Domaine de l'invention

La présente invention se situe dans le domaine du soudage d'éléments plastiques par induction. Elle concerne plus particulièrement le soudage d'une pièce plastique moulée sur le pourtour de l'extrémité d'un corps tubulaire constitué d'au moins une couche métallique et d'au moins une couche de résine thermoplastique

### Etat de la technique

Un dispositif de soudage tel que décrit dans le chapitre précédent est divulgué dans le brevet US 4 454 402.

Dans ce type de dispositif, les boucles de champ magnétique générées par la bobine ne sont que partiellement canalisées. II en résulte que certaines lignes de champ magnétique traversent le corps tubulaire et la pièce plastique en des endroits qui ne correspondent pas à la zone de soudage. Le chauffage de ces régions incontrôlées peut engendrer des défauts, comme par exemple une déformation locale du matériau d'emballage en dehors de la zone à souder. Ce problème est d'autant plus accentué lorsque l'extrémité libre du goulot est obturée par un opercule métallique, à savoir par un élément favorisant la création de courants induits.

II existe donc un besoin de remédier aux problèmes précités, en particulier lorsque le goulot est obturé par un opercule métallique.

### Exposé général de l'invention

Dans l'invention, la solution du problème précité consiste à munir le dispositif de soudage d'un élément à grande perméabilité magnétique, à savoir un élément qui canalise les lignes de champ magnétique dans l'environnement de l'extrémité libre du goulot.

L'objet de l'invention concerne donc un dispositif de soudage par induction magnétique comprenant des moyens inductifs et une zone de soudage pour la fixation d'une pièce plastique moulée sur le pourtour de l'extrémité d'un corps tubulaire constitué d'au moins une couche métallique et d'au moins une couche de résine thermoplastique; la pièce plastique moulée comporte un goulot; le dispositif comprend en outre un logement adapté pour contenir ledit goulot; les moyens inductifs étant disposés à proximité de la zone de soudage et du logement, c'est à dire à des distances suffisamment proches pour ressentir le champ magnétique qui est généré par lesdits moyens inductifs. Le dispositif selon l'invention se caractérise par le fait que le logement comprend un élément à grande perméabilité magnétique.

Grâce à la présence de l'élément à grande perméabilité magnétique, on diminue considérablement le nombre des lignes de champs qui traversent le goulot. Lorsque ce dernier est muni d'un opercule métallique, le risque de chauffage à cet endroit est donc fortement réduit, voir éliminé.

A noter également que l'élément à grande perméabilité magnétique présente un avantage important par rapport à un élément dont la fonction aurait simplement visé à bloquer le champ magnétique. On évite en effet qu'un échauffement local de l'élément se produise, ce qui aurait eu pour conséquence le maintien des inconvénients que l'on cherche précisément à éliminer.

Selon un mode de réalisation de l'invention, l'élément à grande perméabilité magnétique constitue l'intégralité de la paroi interne du logement.

De préférence, le logement est constitué par l'orifice d'un élément inductif usiné qui forme une spire des moyens inductifs.

### Exposé détaillé de l'invention

L'invention est décrite plus en détail ci-après au moyen d'un exemple illustré par les figures suivantes :

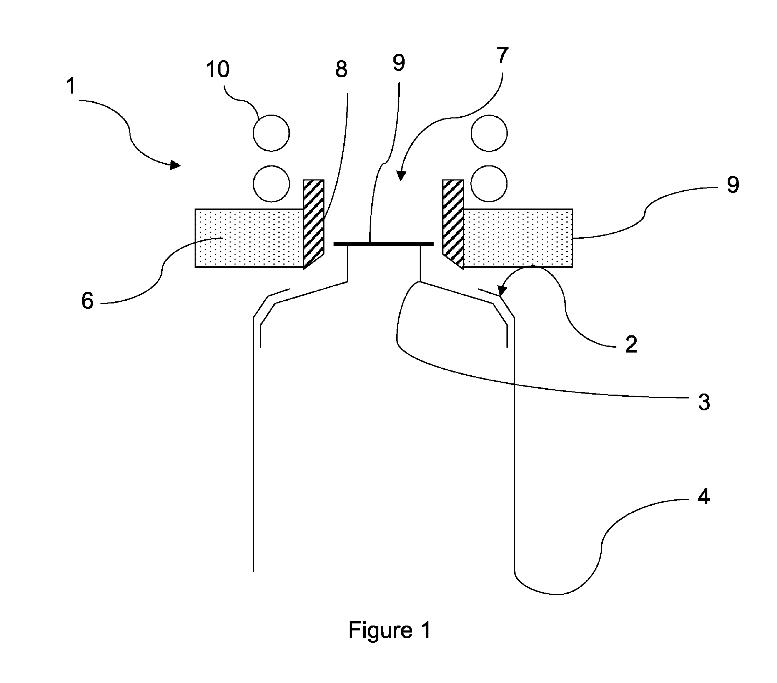

La figure 1 présente une coupe schématique d'un dispositif de soudage selon l'invention.

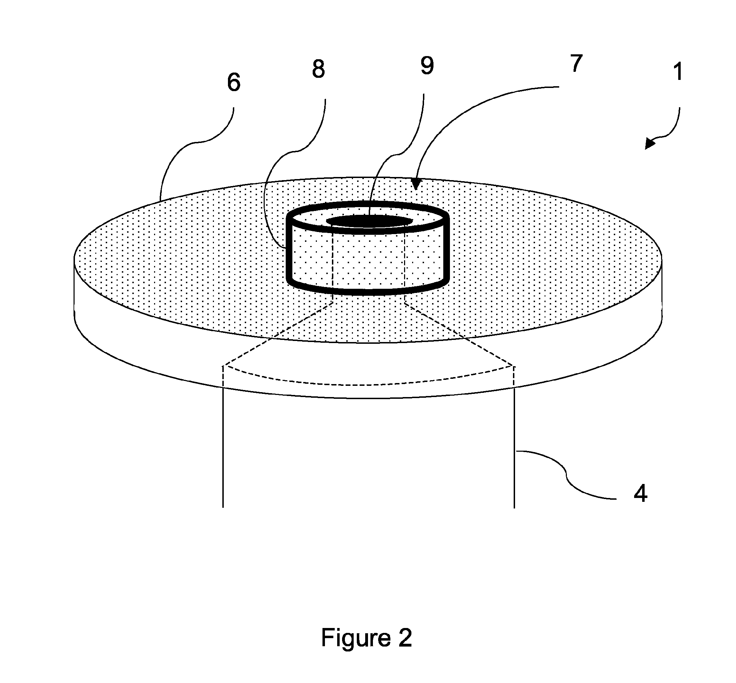

La figure 2 présente une vue en perspective du dispositif de la figure 1.

Le dispositif de soudage **1** comprend un enroulement **10** fixé sur un élément inductif usiné **6,** ce dernier comportant un orifice **7** qui loge l'extrémité libre du goulot **5** d'une tête de tube **3.**
Le dispositif comprend en outre une zone soudage **2** qui correspond à l'endroit ou se superposent la périphérie de la tête de tube **3** et l'extrémité d'un corps tubulaire **4** constitué d'au moins une couche métallique et d'au moins une couche de résine thermoplastique.
Le goulot **5** est obturé par un opercule métallique **9.**
L'enroulement **10** et l'élément inductif **6** forme une bobine d'induction, l'élément inductif **6** formant la spire la plus proche de la zone de soudage **2.**
Afin de réduire, voir éliminer, le passage de lignes du champ magnétique à travers l'opercule métallique **9,** l'orifice **7** comporte sur son pourtour intérieur un élément annulaire **8** constitué d'un matériau tel que ferrite qui canalise les lignes de champ magnétique.
La présence de l'élément annulaire **8** évite que des lignes de champs magnétique traversent l'opercule métallique **9,** faute de quoi ce dernier serait chauffé et générerait des déformations comme indiqué précédemment. Il importe également de relever que l'élément annulaire **8** doit pouvoir être traversé par les lignes de champs magnétique et non pas les bloquer. Si tel était le cas, il chaufferait, ce qui irait précisément à l'encontre de l'objectif recherché.
La présence de l'élément annulaire **8** est d'autant plus avantageuse étant donné la proximité entre la zone de chauffage pour le soudage **2** et la zone à ne pas chauffer, à savoir celle où se trouve l'opercule métallique **9.**
On notera enfin que la présence de l'élément annulaire **8** permet de mieux focaliser l'énergie de chauffage au niveau de la zone de soudage **2,** ce qui constitue un gain de courant nécessaire au bon fonctionnement du dispositif de chauffage.

## Revendications

1. Dispositif de soudage par induction magnétique (1) comprenant des moyens inductifs (6,10) et une zone de soudage (2) pour la fixation d'une pièce plastique moulée (3) sur le pourtour de l'extrémité d'un corps tubulaire (4) constitué d'au moins une couche métallique et d'au moins une couche de résine thermoplastique; la pièce plastique moulée (3) comportant un goulot (5); le dispositif (1) comprenant en outre un logement (7) adapté pour contenir ledit goulot (5); les moyens inductifs (6,10) étant disposés à proximité de la zone de soudage (2) et du logement (7); **caractérisé par le fait que** le logement (7) comprend un élément à grande perméabilité magnétique (8).

2. Dispositif selon la revendication 1 **caractérisé par le fait que** l'élément à grande perméabilité magnétique (8) constitue l'intégralité de la paroi interne du logement (7).

3. Dispositif selon la revendication 1 ou 2 **caractérisé par le fait que** les moyens inductifs (6,10) comprennent un élément inductif usiné (6) qui comporte un orifice, ce dernier constituant ledit logement (7).
